# FASCICULE DE BREVET EUROPEEN

(11) **EP 0 802 640 B1**
(45) Date de publication et mention de la délivrance du brevet: **09.08.2000**
(21) Numéro de dépôt: 97400787.4
(22) Date de dépôt: 07.04.1997
(51) Int. Cl.: H04B 10/17, H04J 14/02

(54) **Procédé et disposif d'amplification de canaux extraits d'un multiplex de longueurs d'onde**
Verfahren und Vorrichtung zur Verstärkung von aus Wellenlängenmultiplex aufbereiteten Kanälen
Amplification method and apparatus for channels extracted from a wavelength division multiplex

(30) Priorité: 12.04.1996 FR 9604604
(43) Date de publication de la demande: 22.10.1997
(73) Titulaire: ALCATEL, 75008 Paris (FR)
(72) Inventeur: Jourdan, Amaury, 91600 Savigny sur Orge (FR); Desthieux, Bertrand, 75014 Paris (FR)
(74) Mandataire: Fournier, Michel Robert Marie

(56) Documents cités:
- EP-A- 0 242 802
- EP-A- 0 695 050
- PATENT ABSTRACTS OF JAPAN vol. 017, no. 261 (E-1369), 21 Mai 1993 & JP 05 003356 A (NEC CORP), 8 Janvier 1993,
- IEEE PHOTONICS TECHNOLOGY LETTERS, vol. 3, no. 8, 1 Août 1991, pages 718-720, XP000223738 KYO INOUE ET AL: "TUNABLE GAIN EQUALIZATION USING A MACH-ZEHNDER OPTICAL FILTER IN MULTISTAGE FIBER AMPLIFIERS"

## Description

L'invention se situe dans le domaine des communications optiques utilisant le multiplexage en longueurs d'onde ou WDM (de l'anglais "Wavelength Division Multiplex").

Dans ce type de communication, plusieurs canaux d'information portés par des longueurs d'onde différentes sont véhiculés simultanément dans des liaisons optiques. L'invention concerne plus particulièrement la réception et l'extraction d'un ou de plusieurs canaux d'un tel multiplex.

L'extraction de canaux est notamment réalisée dans les noeuds de routage d'un réseau optique. Ainsi, pour aiguiller un des canaux du multiplex reçu par le noeud vers une liaison optique déterminée, on extrait le canal par filtrage, par exemple au moyen d'un démultiplexeur ou d'un filtre accordable accordé sur la longueur de ce canal puis, au moyen d'un convertisseur de longueur d'onde, on modifie la longueur d'onde de la porteuse pour lui donner une valeur associée à la liaison voulue.

Tout filtrage optique introduit cependant des pertes de puissance qui sont dues au filtre proprement dit ainsi qu'aux moyens de couplage d'entrée et de sortie du filtre. Ainsi, un dispositif de filtrage produit un effet d'atténuation qu'il convient généralement de compenser par une amplification. On utilisera par exemple un amplificateur optique présentant un gain au moins égal au coefficient d'atténuation du filtre, le coefficient d'atténuation étant défini comme le rapport supérieur à 1 de la puissance optique d'entrée à la puissance optique de sortie du filtre.

L'inconvénient d'une telle amplification est qu'elle s'accompagne toujours d'une dégradation du rapport signal à bruit du signal optique obtenu. La dégradation est due au fait qu'un amplificateur optique crée un bruit sensiblement proportionnel à son gain et qu'on appelle "émission spontanée amplifiée" ou "ASE". Aussi, pour compenser l'atténuation d'un dispositif optique tout en dégradant le moins possible le rapport signal à bruit, il convient de placer l'amplificateur en amont du dispositif atténuateur. Dans ce cas, le rapport signal à bruit n'est pas dégradé par l'atténuation, ce qui n'est pas le cas si on place l'amplificateur en aval. Un tel dispositif est illustré par la demande de brevet européen EP-A-695050 qui décrit à la figure 11 un préamplificateur recevant un multiplex de longueurs d'onde et placé en amont d'un démultiplexeur suivi de filtres.

Cependant, dans le cas d'un filtrage, la solution qui assure le meilleur rapport signal à bruit n'est pas optimale du point de vue de l'utilisation des moyens d'amplification. En effet, un filtrage visant par exemple à extraire une partie des canaux d'un multiplex consiste par définition à éliminer les autres canaux. Il en résulte que l'augmentation de puissance apportée par l'amplificateur aux canaux ensuite éliminés par filtrage est inutile.

Aussi l'invention a pour but de proposer une solution qui optimise les moyens d'amplification. Pour cela, on prend en considération le fait qu'il n'est pas toujours indispensable que le rapport signal à bruit du signal amplifié et filtré soit le meilleur possible. En pratique, on peut se fixer une valeur limite du rapport signal à bruit qui soit suffisante pour les traitements ultérieurs du signal. De même, on peut évaluer la puissance optique nécessaire à ces traitements.

Plus précisément, l'invention a pour objet un procédé pour extraire et amplifier au moins un canal d'un multiplex de longueurs d'onde de façon à fournir à partir d'une onde optique d'entrée matérialisant ledit multiplex au moins une onde optique de sortie comportant une partie des composantes spectrales dudit multiplex, ledit procédé comprenant :
- une première étape d'amplification appliquant un premier gain à l'onde d'entrée pour fournir une onde préamplifiée,
- une étape de sélection de longueur(s) d'onde appliquée à l'onde préamplifiée pour fournir au moins une onde filtrée, ledit procédé étant caractérisé en ce que pour conférer auxdites composantes spectrales de chaque onde de sortie un rapport signal à bruit au moins égal à une valeur limite fixée et une puissance optique déterminée, il comprend une seconde étape d'amplification appliquant un second gain respectivement à chaque onde filtrée pour fournir une onde de sortie correspondante, en ce que la valeur du premier gain est insuffisante pour obtenir ladite puissance déterminée mais suffisante pour que chaque rapport signal à bruit soit au moins égal à ladite valeur limite et en ce que chaque second gain a une valeur qui assure auxdites composantes spectrales ladite puissance déterminée.

Avantageusement, la seconde étape d'amplification s'effectue en mode de saturation de gain. Il est en effet souhaitable que la puissance des composantes spectrales de l'onde de sortie soit peu dépendante de leurs longueurs d'onde.

L'invention a également pour objet un dispositif de mise en oeuvre du procédé. Le dispositif comporte:
- un amplificateur optique d'entrée apte à recevoir l'onde d'entrée et à fournir une onde préamplifiée ,
- des moyens de sélection de longueur(s) d'onde couplés à l'amplificateur d'entrée pour recevoir l'onde préamplifiée et aptes à fournir au moins une onde filtrée.

Ledit dispositif est caractérisé en ce que pour conférer auxdites composantes spectrales de chaque onde de sortie un rapport signal à bruit au moins égal à une valeur limite fixée et une puissance optique déterminée, il comporte au moins un amplificateur de sortie couplé aux moyens de sélection pour recevoir une onde filtrée et fournissant une onde de sortie correspondante, en ce que le gain de l'amplificateur d'entrée est insuffisant pour obtenir ladite puissance déterminée mais suffisant pour que chaque rapport signal à bruit soit au moins égal à ladite valeur limite et en ce que le gain de chaque amplificateur de sortie a une valeur qui assure auxdites composantes spectrales ladite puissance déterminée.

Selon un autre aspect de l'invention, on utilise des amplificateurs dont les gains sont peu dépendants des longueurs d'ondes à amplifier. Cette propriété peut être obtenue facilement avec des amplificateurs à fibres, telles que des fibres fluorées ou dopées à l'aluminium.

Selon un mode de réalisation performant et avantageux du point de vue coût de fabrication, les amplificateurs à fibres sont associées à des moyens de pompage optique communs.

Afin d'améliorer le rapport signal à bruit et selon une variante de réalisation, le dispositif est en outre caractérisé en ce que en ce que la fibre amplificatrice de l'amplificateur de sortie est couplée aux moyens de sélection, en ce que des moyens de couplage d'entrée sont prévus pour introduire une première onde de pompe dans la fibre amplificatrice de l'amplificateur d'entrée et pour appliquer ladite onde préamplifiée aux moyens de sélection et en ce que des moyens de couplage de sortie sont prévus pour introduire une seconde onde de pompe dans la fibre amplificatrice de chaque amplificateur de sortie et pour en extraire ladite onde de sortie correspondante.

D'autres aspects et avantages de l'invention apparaîtront dans la suite de la description en référence aux figures.
- La figure 1 est un schéma de principe du dispositif selon l'invention.
- La figure 2 représente une variante de réalisation utilisant un filtre réjecteur.
- La figure 3 est un premier mode de réalisation utilisant des amplificateurs à fibres.
- La figure 4 représente une variante de réalisation préférée.
- La figure 5 représente une autre variante pour l'extraction simultanée de plusieurs canaux.

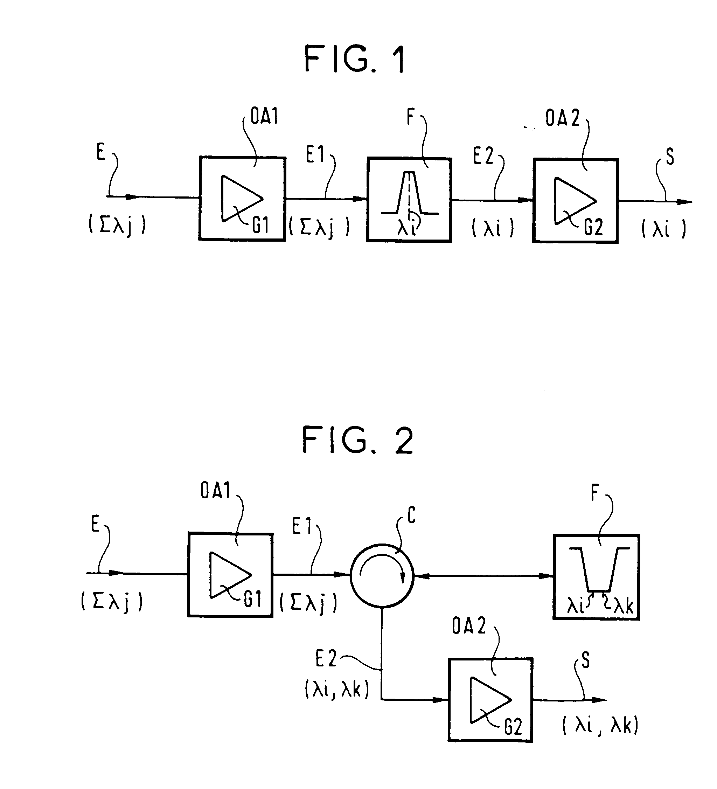

La figure 1 représente schématiquement un dispositif d'extraction de canal d'un multiplex de longueurs d'onde conforme à l'invention. Pour simplifier l'exposé, on se place dans le cas où une seule longueur d'onde λi est extraite du multiplex Σλj.

Le dispositif comprend un amplificateur d'entrée OA1 couplé à l'entrée d'un sélecteur de longueur d'onde F dont la sortie est couplée à un amplificateur de sortie OA2. L'amplificateur OA1 reçoit le multiplex sous la forme d'une onde optique d'entrée E qui contient plusieurs composantes spectrales de longueurs d'onde λ1,λ2,...,λj,...,λn. L'amplificateur OA1 fournit au sélecteur F une onde préamplifiée E1. contenant les mêmes composantes spectrales que l'onde d'entrée E. Le sélecteur F qui est par exemple un filtre accordé sur une des longueurs d'onde λi du multiplex d'entrée fournit à l'amplificateur de sortie OA2 l'onde filtrée E2. L'amplificateur de sortie OA2 fournit une onde de sortie S qui comporte la seule composante spectrale λi.

Conformément à l'invention, les valeurs des gains, respectivement G1, G2, des amplificateurs OA1, OA2 sont déterminées de la façon suivante. On connaît la puissance optique Ps souhaitée pour le canal à extraire c'est-à-dire pour la composante spectrale λi en sortie du dispositif. On peut estimer d'autre part la puissance minimale des composantes spectrales de l'onde d'entrée E. On peut enfin déterminer le coefficient d'atténuation A caractéristique du filtre et des couplages entre le filtre et les deux amplificateurs. On peut donc en déduire la valeur du produit G1.G2 des gains des amplificateurs OA1 et OA2.

On se fixe par ailleurs la valeur R du rapport signal à bruit de la composante spectrale de sortie. Cette valeur R permettra de déterminer la valeur de G1. Le produit G1.G2 étant connu, on en déduit la valeur de G2.

Les valeurs exactes des gains G1 et G2 peuvent être déterminées expérimentalement ou par simulation, en tenant compte des caractéristiques des amplificateurs utilisés.

On peut également évaluer ces valeurs de gain de façon approchée par un calcul direct. Pour cela, on suppose que le rapport α de la puissance d'émission spontanée amplifiée (ASE) au gain des amplificateurs utilisés est une constante connue. Dans ce cas, en négligeant le bruit du signal d'entrée, on aura :
- Puissance d'entrée par canal = Pe
- Puissance de sortie du canal sélectionné Ps=G1.G2.Pe/A
- Puissance de bruit dû à OA2 = α.G2
- Puissance de bruit dû à OA1= α.G1.G2/A
- Rapport signal à bruit en sortie R=(Pe/α)/(1+A/G1)

L'expression de R montre que l'on peut fixer le rapport signal à bruit en sortie par un choix approprié de la valeur du seul gain G1. La conclusion serait la même si on tenait compte du bruit présent dans le signal d'entrée.

A titre de comparaison, si l'amplification était placée uniquement en amont du filtre, on aurait : R=Pe/α.

Dans le cas où l'amplification est placée uniquement en aval du filtre, on a par contre : R=Pe/(αA).

La solution préconisée par l'invention constitue donc un compromis qui tient compte du fait qu'en pratique on peut se contenter d'un rapport signal à bruit légèrement inférieur à la valeur maximale Pe/α. On en retire cependant une économie de ressources d'amplification d'autant plus grande que le nombre de canaux d'entrée est élevé. On peut aussi obtenir des puissances de sortie plus élevées.

En pratique, les valeurs de gain des amplificateurs seront obtenues grâce à un dimensionnement approprié, en combinaison avec un ajustement du pompage optique ou électrique, selon qu'il s'agit d'amplificateurs à fibre ou semi-conducteurs.

Dans le cas où le filtre F est accordable en longueur d'onde ou dans la perspective d'une production standardisée, il est avantageux de rendre le dispositif peu dépendant des canaux sélectionnés, c'est-à-dire de le rendre insensible aux éventuelles dispersions des niveaux de puissance des composantes spectrales. Pour cela, on pourra choisir un amplificateur de sortie dimensionné pour fonctionner en saturation de gain, de façon à égaliser la puissance de sortie. En complément à ces mesures de dimensionnement, on peut également jouer sur la valeur du gain G1 de façon à ce que la puissance appliquée à l'entrée de l'amplificateur de sortie soit suffisante pour le placer dans son état de saturation.

La figure 2 est une variante montrant que l'invention peut s'appliquer à des dispositifs sélectionnant plusieurs longueurs d'onde et/ou utilisant des filtres fonctionnant en réflexion.

Selon cette variante, l'amplificateur d'entrée OA1 est couplé à un filtre réjecteur F par l'intermédiaire d'un circulateur C à trois ports d'entrée/sortie. Les deux premiers ports sont couplés respectivement à l'amplificateur d'entrée OA1 et au filtre réjecteur F et son troisième port est relié à l'amplificateur de sortie OA2. Le filtre réjecteur F est choisi pour réfléchir par exemple les longueurs d'onde λi et λk qui correspondent aux canaux que l'on veut extraire du multiplex d'entrée. Les règles de dimensionnement des amplificateurs sont celles qui viennent d'être exposées précédemment.

Dans le cas où on utilise des amplificateurs à fibre, ce même montage peut servir pour injecter les ondes de pompe. Pour cela, il suffit que le filtre F soit prévu pour réjecter la longueur d'onde de l'onde de pompe qui sera alors introduite, par exemple au moyen d'un coupleur, à l'entrée de l'amplificateur OA1.

Bien que l'invention soit applicable à des dispositifs munis d'amplificateurs optiques semi-conducteurs, dans l'état actuel de la technique des amplificateurs optiques , ceux qui sont toutefois les mieux adaptés aux multiplex de longueurs d'onde sont les amplificateurs à fibre, en particulier à fibre fluorée. En effet, ils ont l'avantage de présenter un gain peu dépendant de la longueur d'onde et du nombre de canaux à amplifier.

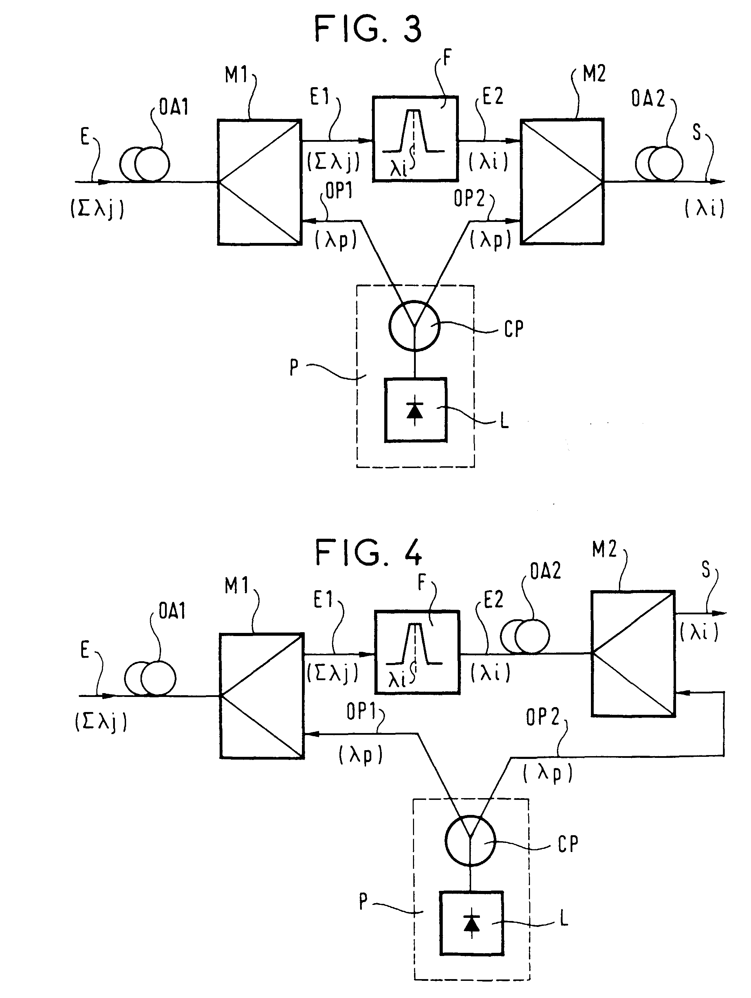

La figure 3 montre le premier exemple de réalisation adapté à ce type d'amplification. Les deux amplificateurs à fibre OA1, OA2 sont constitués de fibres amplificatrices associées à des moyens de pompage P. Selon la réalisation représentée, ces moyens de pompage P sont communs aux deux amplificateurs. Ils sont constitués d'un laser de pompe L relié à un coupleur CP qui fournit deux ondes de pompe OP1, OP2 destinées respectivement aux fibres amplificatrices des amplificateurs OA1, OA2.

Les fibres amplificatrices OA1, OA2 sont couplées respectivement aux entrée et sortie du filtre F par l'intermédiaire de moyens de couplage M1, M2 qui assurent également l'introduction des ondes de pompe OP1, OP2 respectivement dans les fibres amplificatrices des amplificateurs OA1, OA2.

Avantageusement, on choisira comme moyen de couplage M1, M2 des multiplexeurs-démultiplexeurs capables de séparer la longueur d'onde de l'onde de pompe respectivement de celles du multiplex d'entrée et de celle du canal sélectionné par le filtre. L'utilisation de tels composants permet en effet de réduire les pertes de couplage par rapport au cas où l'on utiliserait des coupleurs optiques classiques dont les pertes sont typiquement de 3 dB.

L'avantage de cette réalisation est d'abord qu'elle est économique quant au nombre de composants qui la forment. De plus, sa disposition symétrique permet un fonctionnement indépendant du sens de propagation des ondes.

Elle présente toutefois l'inconvénient de ne pas être optimale en ce qui concerne le rapport signal à bruit car le multiplexeur de sortie M2 introduit une atténuation située en amont de l'amplificateur de sortie OA2. Aussi, on pourra préférer la disposition représentée à la figure 4 selon laquelle la fibre amplificatrice de l'amplificateur de sortie OA2 est couplée directement au filtre F alors que le multiplexeur de sortie M2 est disposé de façon à introduire la seconde onde de pompe OP2 dans cette fibre amplificatrice et à extraire l'onde de sortie S. Il en résulte que le bruit d'émission spontanée amplifiée de l'amplificateur OA2 est atténué par le multiplexeur M2, ce qui diminue le rapport signal à bruit de l'onde de sortie.

A titre d'illustration, on va donner quelques détails concernant un exemple de réalisation pratique utilisant des amplificateurs à fibre fluorée et un filtre de type Fabry-Pérot :
- multiplex à 16 canaux
- intervalle spectral du multiplex : 1530-1560 nm
- longueur d'onde de pompe : 1480 nm
- atténuation du filtre A : 6 dB
- rapport signal à bruit en sortie R : 30 dB (pour un intervalle spectral de 0,1 nm)
- gains des amplificateurs : G1 = G2 = 16 dB
- puissance d'entrée Pe : -21 dBm
- puissance de sortie Ps : +5 dBm,
les puissances Pe et Ps étant exprimées en dBm défini comme dix fois le logarithme de la puissance exprimée en milliwatts.

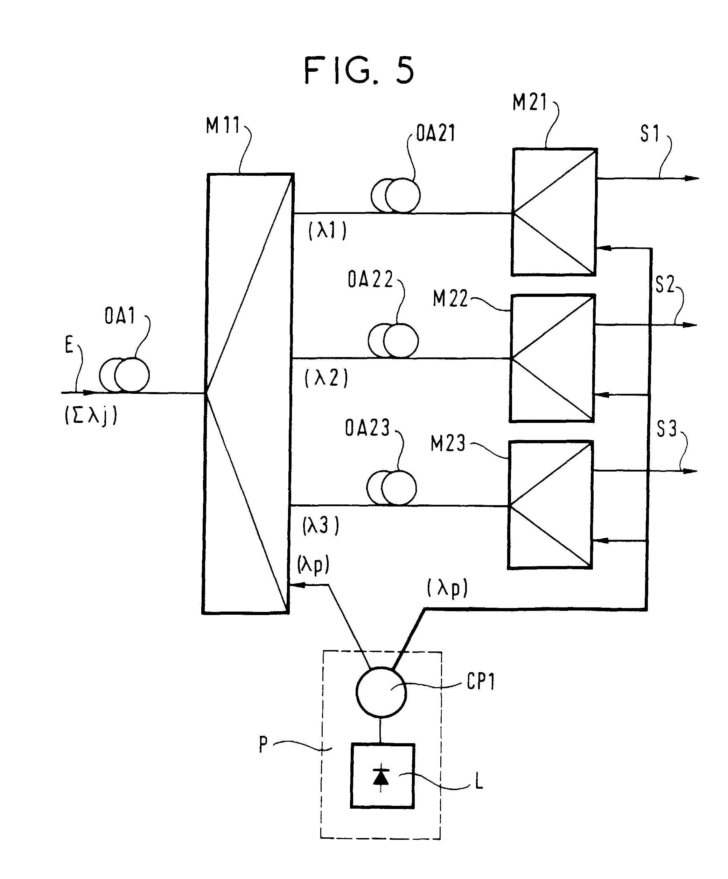

La figure 5 montre un autre dispositif selon l'invention qui permet d'extraire simultanément plusieurs canaux d'un multiplex.

Selon l'exemple représenté, on extrait trois canaux portés par les longueurs d'onde λ1, λ2, λ3. Le multiplex d'entrée E est amplifié par l'amplificateur OA1 puis appliqué à l'entrée d'un démultiplexeur M11 à quatre sorties calées sur les longueurs d'onde λ1, λ2, λ3 et λp. Les trois premières sorties sont reliées respectivement aux amplificateurs de sortie OA21, OA22, OA23. La quatrième sortie reçoit l'onde de pompe du dispositif P. Les amplificateurs de sortie OA21, OA22, OA23 fournissent les ondes de sorties S1, S2, S3 par l'intermédiaire des multiplexeurs M21, M22, M23 qui servent aussi à introduire les ondes de pompe destinées à ces amplificateurs.

On peut noter que dans cette réalisation le démultiplexeur M11 joue à la fois le rôle de filtre de sélection des canaux et de coupleur pour introduire l'onde de pompe dans la fibre amplificatrice OA1.

Comme dans la réalisation de la figure 4, le dispositif de pompage P est commun et la puissance de pompe est distribuée vers chaque amplificateur par des moyens de couplage CP1. Ces moyens de couplage peuvent être constitués d'un premier coupleur à fibre à 3dB fournissant un moitié de la puissance de pompe à l'amplificateur OA1 et l'autre moitié à un coupleur en étoile chargé de répartir cette puissance vers les amplificateurs de sortie.

## Revendications

1. Procédé pour extraire et amplifier au moins un canal d'un multiplex de longueurs d'onde de façon à fournir à partir d'une onde optique d'entrée (E) matérialisant ledit multiplex au moins une onde optique de sortie (S) comportant une partie des composantes spectrales (λi) dudit multiplex, ledit procédé comprenant :
- une première étape d'amplification appliquant un premier gain (G1) à l'onde d'entrée (E) pour fournir une onde préamplifiée (E1),
- une étape de sélection (F) de longueur(s) d'onde appliquée à l'onde préamplifiée (E1) pour fournir au moins une onde filtrée (E2),
ledit procédé étant caractérisé en ce que pour conférer auxdites composantes spectrales (λi) de chaque onde de sortie (S) un rapport signal à bruit au moins égal à une valeur limite fixée et une puissance optique déterminée, il comprend une seconde étape d'amplification appliquant un second gain (G2) respectivement à chaque onde filtrée (E2) pour fournir une onde de sortie (S) correspondante, en ce que la valeur du premier gain (G1) est insuffisante pour obtenir ladite puissance déterminée mais suffisante pour que chaque rapport signal à bruit soit au moins égal à ladite valeur limite et en ce que chaque second gain (G2) a une valeur qui assure auxdites composantes spectrales (λi) ladite puissance déterminée.

2. Procédé selon la revendication 1, caractérisé en ce que la seconde étape d'amplification s'effectue en mode de saturation de gain.

3. Dispositif pour extraire et amplifier au moins un canal d'un multiplex de longueurs d'onde de façon à fournir à partir d'une onde optique d'entrée (E) matérialisant ledit multiplex au moins une onde optique de sortie (S) comportant une partie des composantes spectrales (λi) dudit multiplex, ledit dispositif comportant:
- un amplificateur optique d'entrée (OA1) apte à recevoir l'onde d'entrée (E) et à fournir une onde préamplifiée (E1),
- des moyens de sélection (F) de longueur(s) d'onde (λi) couplés à l'amplificateur d'entrée (OA1) pour recevoir l'onde préamplifiée (E1) et aptes à fournir au moins une onde filtrée (E2),
ledit dispositif étant caractérisé en ce que pour conférer auxdites composantes spectrales (λi) de chaque onde de sortie (S) un rapport signal à bruit au moins égal à une valeur limite fixée et une puissance optique déterminée, il comporte au moins un amplificateur de sortie (OA2) couplé aux moyens de sélection (F) pour recevoir une onde filtrée (E2) et fournissant une onde de sortie (S) correspondante, en ce que le gain (G1) de l'amplificateur d'entrée (OA1) est insuffisant pour obtenir ladite puissance déterminée mais suffisant pour que chaque rapport signal à bruit soit au moins égal à ladite valeur limite et en ce que le gain (G2) de chaque amplificateur de sortie (OA2) a une valeur qui assure auxdites composantes spectrales (λi) ladite puissance déterminée.

4. Dispositif selon la revendication 3, caractérisé en ce que le gain (G1) de l'amplificateur d'entrée (OA1) est en outre suffisant pour que chaque amplificateur de sortie (OA2) fonctionne en mode de saturation de gain.

5. Dispositif selon l'une des revendications 3 ou 4, caractérisé en ce que lesdits amplificateurs (OA1, OA2) présentent des gains peu dépendant des différences de longueur d'onde desdites composantes spectrales (λi).

6. Dispositif selon l'une des revendications 3 à 5, caractérisé en ce que lesdits amplificateurs (OA1, OA2) sont des amplificateurs comportant des fibres amplificatrices.

7. Dispositif selon la revendication 6, caractérisé en ce que lesdits amplificateurs d'entrée et de sortie (OA1, OA2) comportent des moyens de pompage optique communs (P) aptes à fournir des ondes de pompe (OP1, OP2) auxdits amplificateurs d'entrée et de sortie (OA1, OA2).

8. Dispositif selon l'une des revendications 6 ou 7, caractérisé en ce que la fibre amplificatrice de chaque amplificateur de sortie (OA2) est couplée aux moyens de sélection (F), en ce que des moyens de couplage d'entrée (M1) sont prévus pour introduire une première onde de pompe (OP1) dans la fibre amplificatrice de l'amplificateur d'entrée (OA1) et pour appliquer ladite onde préamplifiée (E1) aux moyens de sélection (F) et en ce que des moyens de couplage de sortie (M2) sont prévus pour introduire une seconde onde de pompe (OP2) dans la fibre amplificatrice de chaque amplificateur de sortie (OA2) et pour en extraire ladite onde de sortie (S) correspondante.

9. Dispositif selon la revendication 8, caractérisé en ce que lesdits moyens de couplage d'entrée et de sortie (M1, M2) sont des démultiplexeurs aptes à séparer la longueur d'onde (λp) des ondes de pompe (OP1, OP2) respectivement des longueurs d'onde du multiplex (E) et des longueurs d'onde (λi) des composantes spectrales de l'onde de sortie (S).

10. Dispositif selon l'une des revendications 3 à 9, caractérisé en ce que lesdits moyens de sélection (F) sont constitués d'un filtre accordable en longueur d'onde.

## Claims

1. A method of extracting and amplifying at least one channel from a wavelength division multiplex in order to obtain from an input optical wave (E) representing said multiplex at least one output optical wave (S) including some of the spectral components (λi) of said multiplex, characterized in that to confer upon said spectral components (λi) of each output wave (S) a signal to noise ratio at least equal to a fixed limit value and a particular optical power, said method includes:
- a first amplification step applying a first gain (G1) to said input wave (E) to supply a preamplified wave (E1),
- a wavelength selection step (F) applied to said preamplified wave (E1) to obtain at least one filtered wave (E2), and
- a second amplification step applying a second gain (G2) to each filtered wave (E2) to produce a corresponding output wave (S),
and in that the value of said first gain (G1) is insufficient to obtain said particular power but sufficient for each signal to noise ratio to be at least equal to said limit value and each second gain (G2) has a value conferring said particular power on said spectral components (λi).

2. The method claimed in claim 1, characterized in that said second amplification step is effected in gain saturation mode.

3. A device for extracting and amplifying at least one channel from a wavelength division multiplex in order to obtain from an input optical wave (E) representing said multiplex at least one output optical wave (S) including some of the spectral components (λi) of said multiplex, characterized in that to confer upon said spectral components (λi) of each output wave (S) a signal to noise ratio at least equal to a fixed limit value and a particular optical power, said device includes:
- an input optical amplifier (OA1) adapted to receive said input wave (E) and to supply a preamplified wave (E1),
- wavelength (λi) selector means (F) coupled to said input amplifier (OA1) to receive said preamplified wave (E1) and adapted to supply at least one filtered wave (E2), and
- at least one output amplifier (OA2) coupled to said selector means (F) to receive a filtered wave (E2) and supplying a corresponding output wave (S), and in that the gain (G1) of said input amplifier (OA1) is insufficient to obtain said particular power but sufficient for each signal to noise ratio to be at least equal to said limit value and in that the gain (G2) of each output amplifier (OA2) has a value conferring said particular power on said spectral components (λi).

4. The device claimed in claim 3, characterized in that the gain (G1) of said input amplifier (OA1) is also sufficient for each output amplifier (OA2) to operate in gain saturation mode.

5. The device claimed in one of claims 3 or 4, characterized in that said amplifiers (OA1, OA2) have gains that are not much dependent on the wavelength differences of said spectral components (λi).

6. The device claimed in any one of claims 3 to 5, characterized in that said amplifiers (OA1, OA2) are amplifiers incorporating amplifier fibres.

7. The device claimed in claim 6, characterized in that said input and output amplifiers (OA1, OA2) include common optical pumping means (P) adapted to supply pump waves (OP1, OP2) to said input and output amplifiers (OA1, OA2).

8. The device claimed in claim 6 or 7, characterized in that said amplifier fibre of each output amplifier (OA2) is coupled to said selector means (F), in that input coupling means (M1) are provided to feed a first pump wave (OP1) into said amplifier fibre of said input amplifier (OA1) and to apply said preamplified wave (El) to said selector means (F), and in that output coupling means (M2) are provided to feed a second pump wave (OP2) into said amplifier fibre of each output amplifier (OA2) and to extract therefrom said corresponding output wave (S).

9. The device claimed in claim 8, characterized in that said input and output coupling means (M1, M2) are demultiplexers adapted to separate the wavelength (λp) of said pump waves (OP1, OP2) respectively from the wavelengths of said multiplex (E) and the wavelengths (λi) of said spectral components of said output wave (S).

10. The device claimed in any one of claims 3 to 9, characterized in that said selector means (F) comprise a wavelength tunable filter.

## Patentansprüche

1. Verfahren zum Extrahieren und Verstärken wenigstens eines Kanals aus einem Wellenlängenmultiplex, um aus einer optischen Eingangswelle (E), die den Multiplex verkörpert, wenigstens eine optische Ausgangswelle (S) zu liefern, die einen Teil der Spektralkomponenten (λi) des Multiplex aufweist, wobei das Verfahren umfasst:
- einen ersten Verstärkungsschritt, der eine erste Verstärkung (G1) auf die Eingangswelle (E) anwendet, um eine vorverstärkte Welle (E1) zu liefern,
- einen Schritt des Auswählens (F) von Wellenlänge(n), der auf die vorverstärkte Welle (E1) angewendet wird, um wenigstens eine gefilterte Welle (E2) zu liefern,
dadurch gekennzeichnet, dass es, um den spektralen Komponenten (λi) jeder Ausgangswelle (S) ein Signal-Rauschverhältnis, das wenigstens gleich einem festgelegten Grenzwert ist, und eine vorgegebene optische Leistung zu geben, einen zweiten Verstärkungsschritt umfasst, der eine zweite Verstärkung (G2) jeweils auf jede gefilterte Welle (E2) anwendet, um eine entsprechende Ausgangswelle (S) zu liefern, und dass der Wert der ersten Verstärkung (G1) unzureichend ist, um diese vorgegebene Leistung zu erreichen, aber ausreichend ist, damit jedes Signal-Rauschverhältnis wenigstens gleich dem Grenzwert ist, und dass jede zweite Verstärkung (G2) einen Wert hat, der für die spektralen Komponenten (λi) die vorgegebene Leistung gewährleistet.

2. Verfahren nach Anspruch 1, dadurch gekennzeichnet, dass der zweite Verstärkungsschritt im Verstärkungssättigungsmodus ausgeführt wird.

3. Vorrichtung zum Extrahieren und Verstärken wenigstens eines Kanals aus einem Wellenlängenmultiplex, um ausgehend von einer optischen Eingangswelle (E), die den Multiplex verkörpert, wenigstens eine optische Ausgangswelle (S) zu liefern, mit
- einem optischen Eingangsverstärker (OA1), der in der Lage ist, die Eingangswelle (E) zu empfangen und eine vorverstärkte Welle (E1) zu liefern,
- Auswahlmittel (F) für die Wellenlänge(n) (λi), die an den Eingangsverstärker (OA1) gekoppelt sind, um die vorveretärkte Welle (E1) zu empfangen und in der Lage sind, wenigstens eine gefilterte Welle (E2) zu liefern,
dadurch gekennzeichnet, dass, um den spektralen Komponenten (λi) jeder Ausgangswelle ein Signal-Rauschverhältnis, das wenigstens gleich einem festgelegten Grenzwert ist, und eine vorgegebene optische Leistung zu verleihen, die Vorrichtung umfasst:
- wenigstens einen Ausgangsverstärker (OA2), der an die Auswahlmittel (F) gekoppelt ist, um eine gefilterte Welle (E2) zu empfangen und der eine entsprechende Ausgangswelle (S) liefert,
und dass die Verstärkung (G1) des Eingangsverstärkers (OA1) unzureichend ist, um die vorgegebene Leistung zu erreichen, aber ausreichend ist, damit jedes Signal-Rauschverhältnis wenigstens gleich dem Grenzwert ist, und dass die Verstärkung (G2) des Ausgangsverstärkers (OA2) einen Wert hat, der für die spektralen Komponenten (λi) die vorgegebene Leistung gewährleistet.

4. Vorrichtung nach Anspruch 3, dadurch gekennzeichnet, dass die Verstärkung (G1) des Eingangsverstärkers (OA1) ferner ausreichend ist, damit jeder Ausgangsverstärker (OA2) im Verstärkungssättigungsmodus arbeitet.

5. Vorrichtung nach einem der Ansprüche 3 oder 4, dadurch gekennzeichnet, dass die Verstärker (OA1, OA2) Verstärkungen aufweisen, die wenig von den Wellenlängendifferenzen der spektralen Komponenten (λi) abhängen.

6. Vorrichtung nach einem der Ansprüche 3 bis 5, dadurch gekennzeichnet, dass die Verstärker (OA1, OA2) Verstärker sind, die verstärkende Fasern umfassen.

7. Vorrichtung nach Anspruch 6, dadurch gekennzeichnet, dass die Eingangs- und Ausgangsverstärker (OA1, OA2) gemeinsame optische Pumpmittel (P) umfassen, die in der Lage sind, Pumpwellen (OP1, OP2) an die Eingangsund Ausgangsverstärker (OA1, OA2) zu liefern.

8. Vorrichtung nach einem der Ansprüche 6 oder 7, dadurch gekennzeichnet, dass die verstärkende Faser jedes Ausgangsverstärkers (OA2) an die Auswahlmittel (F) gekoppelt ist, dass Eingangskoppelmittel (M1) vorgesehen sind, um eine erste Pumpwelle (OP1) in die verstärkende Faser des Eingangsverstärkers (OA1) einzuspeisen und die vorverstärkte Welle (E1) an die Auswahlmittel (F) anzulegen, und dass Ausgangskoppelmittel (M2) vorgesehen sind, um eine zweite Pumpwelle (OP2) in die verstärkende Faser jedes Ausgangsverstärkers (OA2) einzuspeisen und daraus die entsprechende Ausgangswelle (S) zu extrahieren.

9. Vorrichtung nach Anspruch 8, dadurch gekennzeichnet, dass die Eingangs- und Ausgangskoppelmittel (M1, M2) Demultiplexer sind, die in der Lage sind, die Wellenlänge (λp) der Pumpwellen (OP1, OP2) bzw. die Wellenlängen des Multiplex (E) und die Wellenlängen (λi) der spektralen Komponenten der Ausgangswelle (S) zu trennen.

10. Vorrichtung nach einem der Ansprüche 3 bis 9, dadurch gekennzeichnet, dass die Auswahlmittel (F) durch einen wellenlängenabstimmbaren Filter gebildet sind.
